# FASCICULE DE BREVET EUROPEEN

(11) **EP 4 344 959 B1**
(45) Date de publication et mention de la délivrance du brevet: **12.03.2025**
(21) Numéro de dépôt: 23192452.3
(22) Date de dépôt: 21.08.2023
(51) Int. Cl.: B60R 13/01

(54) **DISPOSITIF D'HABILLAGE INTÉRIEUR POUR VÉHICULE UTILITAIRE COMPRENANT UN FLAN COMPOSITE MULTICOUCHE**
INNENVERKLEIDUNG FÜR EIN NUTZFAHRZEUG MIT EINEM MEHRSCHICHTIGEN VERBUNDZUSCHNITT
INTERIOR TRIM DEVICE FOR A COMMERCIAL VEHICLE COMPRISING A MULTILAYER COMPOSITE BLANK

(30) Priorité: 30.09.2022 FR 2210029
(43) Date de publication de la demande: 03.04.2024
(73) Titulaire: Dabireau Business, 44330 Le Pallet (FR)
(72) Inventeur: DABIREAU, Jean-Michel, 44330 LE PALLET (FR)
(74) Mandataire: Ipsilon

(56) Documents cités:
- CA-A1- 2 566 661
- FR-A1- 2 964 919
- FR-A1- 3 059 282
- US-A- 4 986 590

## Description

La présente invention concerne un dispositif d'habillage intérieur pour véhicule utilitaire. L'invention concerne également l'habillage intérieur pour véhicule utilitaire en tant que tel, un procédé de stockage d'un dispositif, le véhicule utilitaire roulant en tant que tel présentant un espace de chargement avec au moins un habillage intérieur selon la présente invention, un ensemble prêt à monter (encore appelé « kit ») pour l'habillage intérieur pour un espace de chargement d'un véhicule utilitaire et un procédé de montage de cet habillage intérieur.

L'habillage de l'espace de chargement d'un véhicule utilitaire roulant est connu. Cet habillage s'opère typiquement dans l'art à l'aide de panneaux de bois qui sont assemblés sur les parois de cet espace de chargement, généralement par l'utilisateur même du véhicule utilitaire ou par une société tierce spécialisée en la réalisation de tels habillages. Les méthodes d'habillage qui impliquent des techniques majoritairement artisanales, varient donc énormément. Par exemple, des tasseaux de bois peuvent être utilisés ou pas pour caler et fixer les différents panneaux. Ces opérations d'assemblage des panneaux entre eux et de fixation des panneaux au véhicule sont en outre fastidieuses. Elles ont néanmoins pour avantage d'aboutir généralement à la réalisation d'une structure offrant une résistance mécanique suffisante. Les panneaux de bois peuvent être vissées dans les tasseaux ou tout autre point d'attache. Si de telles techniques permettent une personnalisation de l'espace de chargement d'un véhicule utilitaire, de nombreux utilisateurs souhaitent un véhicule utilitaire dont l'espace de chargement présente déjà un habillage intérieur fourni et installé par le fabricant du véhicule. Alternativement, pour les véhicules déjà en circulation ou vendus sans cet habillage, il existe un besoin pour un dispositif d'habillage facile à installer, éventuellement sous forme d'un kit, que les utilisateurs pourraient mettre en œuvre eux-mêmes.

A titre d'illustration, le document FR2964919 divulgue un habillage de protection de passage de roue positionnable à l'intérieur d'un véhicule roulant du genre fourgon à recouvrement d'un passage de roues dudit véhicule roulant pour la protection dudit passage de roue.

Le document CA2566661 décrit un panneau de revêtement intérieur de véhicule utilitaire formé à partir d'une couche centrale disposée entre des première et seconde peaux métalliques.

Le document FR3059282A1 divulgue un panneau pliable de garnissage intérieur de véhicule automobile, ledit panneau comprenant des bandes élastiques et montées en tension permanentes afin d'assurer un rappel des bords l'un vers l'autres dans toutes les configurations dudit panneau.

L"invention a pour buts de proposer un habillage intérieur de l'espace de chargement d'un véhicule utilitaire roulant précité dont la conception permet une mise en œuvre facile par un fabricant de tels véhicules utilitaires, ainsi que de fournir un dispositif d'habillage intérieur pour l'espace de chargement d'un véhicule utilitaire facile à installer, éventuellement sous forme d'un kit, que les utilisateurs peuvent eux-mêmes mettre en œuvre.

Ces habillages doivent en outre présenter une résistance mécanique finale suffisante pour de tels espaces de chargement.

Un but de l'invention est de proposer un habillage de l'espace de chargement d'un véhicule utilitaire roulant de conception simplifiée, de résistance mécanique élevée, facile à monter.

A cet effet, l'invention a pour objet un dispositif d'habillage intérieur de véhicule utilitaire, caractérisé en ce que ledit dispositif d'habillage intérieur comprend un ou plusieurs panneaux, chaque panneau se présente sous forme d'un flan composite multicouche comprenant au moins une couche de matière de synthèse prise en sandwich entre deux couches de métal, chaque panneau est formé d'une succession de volets reliés par des lignes de pliage s'étendant parallèlement, dans lequel au moins l'un des volets présente une ou plusieurs ouvertures, au moins une de ces ouvertures présente une languette, reliée par une ligne de pliage à l'ouverture, pour passer d'une position dans laquelle elle s'étend à l'intérieur de l'ouverture de manière coplanaire avec l'ouverture à une position dans laquelle elle s'étend au moins partiellement en dehors de l'ouverture, la languette étant pourvue d'au moins une ligne de pliage supplémentaire pour former, dans un état plié de la languette, un crochet.

Le flan multicouche comprenant au moins deux couches en métal assure une résistance mécanique de l'habillage tout en permettant l'ajout de languette pliable pour former un crochet.

La matière de synthèse est par exemple choisie dans le groupe des matières de synthèse formées par les polyoléfines, les polyesters, les polyuréthanes, les polymères minéraux, les polycarbonates, et le métal est, de préférence, de l'aluminium.

Selon un mode de réalisation de l'invention, le flan composite multicouche est aminci au niveau de chaque ligne de pliage. Ceci permet de faciliter la pliure entre les volets.

Par exemple, l'une des deux couches de métal a été usinée à chaque ligne de pliage. De manière préférée, la matière de synthèse a été également usinée entre 60 et 100%, plus préférentiellement entre 70 et 80%, telle qu'environ 75% de son épaisseur. Dans ce mode de réalisation, la pliure est extrêmement aisée. L'intégrité physique du dispositif d'habillage intérieur est assurée par la couche de métal pliée au niveau de la ligne de pliage.

Dans un exemple de réalisation, un flan composite de 3 mm présente un usinage de 73%.

Ainsi par exemple, dans le cas où un flan composite fait 3 ou 4 mm d'épaisseur, un usinage de respectivement 2,2 mm de profondeur et 3,2 mm de profondeur permet à ces panneaux d'être pliés facilement.

De manière avantageuse pour une pliure facile, l'épaisseur de la ligne de pliage est de 0,8 mm, soit par exemple 0,2 mm d'une couche de métal et 0,6 mm de matière de synthèse.

De manière préférée, la couche de métal ayant été usinée est une couche non-continue de métal dite couche interne et la deuxième couche de métal est une couche continue dite couche visible. Ainsi, après pliure des différents volets la couche de métal continue qui fait la jonction entre les différents volets, est visible dans l'espace de chargement. L'aspect esthétique ainsi que l'intégrité physique de l'habillage sont donc assurés.

Dans un mode de réalisation particulier, les épaisseurs des couches de métal sont identiques entre les lignes de pliage. Le fait de présenter deux couches d'épaisseur identique permet de limiter les variations de rigidité des volets.

De manière avantageuse, l'épaisseur de la couche de matière de synthèse est entre 5 et 10 fois, préférentiellement entre 7 et 8 fois, supérieure au cumul des épaisseurs des couches de métal.

Dans un mode de réalisation particulier, l'épaisseur de la couche de matière de synthèse est supérieure ou égale à 6,5 fois le cumul des épaisseurs des couches de métal.

Dans un mode de réalisation particulier, l'épaisseur de la couche de matière de synthèse est de 2,6y et le cumul des épaisseurs des couches de métal est de 0,4y, y représentant une longueur telle qu'un millimètre.

De manière préférée, l'épaisseur de chaque couche de métal est de 0,2 mm ± 0,05 mm et l'épaisseur de la couche de matière de synthèse est de 2,6 mm ± 0,05 mm. L'épaisseur totale du flan composite est préférentiellement comprise entre 2 et 4 mm, telle que 3 mm.

Dans un mode de réalisation particulier, le panneau comprend trois volets avec au moins deux volets de dimensions différentes, ou encore quatre volets avec au moins trois volets de dimensions différentes. L'un des avantages de tels modes de réalisation est le fait de pouvoir replier le panneau sur lui-même pour du stockage ou du transport, par exemple. En effet, si les volets devaient avoir les mêmes dimensions, leur pliage serait compliqué par le fait que les lignes de pliages se retrouvent les unes au-dessus des autres, empêchant un repliement du panneau sur lui-même. Ainsi dans un tel cas de figure (volets présentant les mêmes dimensions), le panneau devrait être plié en accordéon forçant un usinage d'une couche de métal en alternance d'un côté ou de l'autre du panneau (la couche de matière de synthèse étant typiquement plus facile à étirer qu'à comprimer), ce qui pourrait en altérer l'esthétique finale, une fois le panneau posé.

En outre, dans un mode de réalisation particulier des ouvertures appropriées sont ajoutées aux volets du dispositif d'habillage intérieur selon la présente invention, telles que des ouvertures pour un passage de roue et/ou une ouverture pour le passage d'un renfort de plafond.

Dans un mode de réalisation particulier, le dispositif d'habillage intérieur selon l'invention comprend une configuration repliée et une configuration déployée, ladite configuration repliée comprenant au moins un premier volet replié sur un deuxième volet via l'une des lignes de pliage parallèles.

De manière avantageuse, un troisième volet est replié sur le premier volet replié via l'une des lignes de pliages parallèles.

De manière avantageuse, la ou les lignes de pliages parallèles présentent des épaisseurs amincies ou nulles de la couche de métal du côté extérieur du pli.

De manière avantageuse, la languette présente un moyen d'attache telle qu'une ouverture pour une vis. Ainsi, dans un mode de réalisation particulier, le crochet formé par pliage de la languette est utilisé non seulement comme un crochet, mais également comme support de moyen d'attache.

De manière avantageuse, le dispositif d'habillage intérieur selon l'invention présente au moins deux languettes de tailles différentes. De manière plus avantageuse, le dispositif d'habillage intérieur selon l'invention présente plusieurs languettes de tailles différentes réparties de manière régulière et/ou optimisée selon la nature du véhicule utilitaire à équiper dudit dispositif.

Dans un mode de réalisation particulier, le véhicule utilitaire est de poids inférieur à 5 tonnes en charge, préférentiellement inférieur à 3,5 tonnes en charge.

De manière préférée, le véhicule utilitaire est un fourgon, un van ou une camionnette.

Dans un mode de réalisation particulier, le dispositif d'habillage intérieur selon la présente invention comprend des moyens d'attache pour personnaliser l'espace de chargement du véhicule utilitaire une fois le dispositif d'habillage intérieur en place.

L'objet de la présente invention concerne aussi un habillage intérieur de véhicule utilitaire comprenant au moins un dispositif d'habillage intérieur tel que décrit ci-dessus.

Par « habillage intérieur de véhicule utilitaire », il est entendu dans le contexte de la présente invention que le dispositif d'habillage intérieur selon l'invention est installé dans un véhicule utilitaire de manière à former un produit fini d'habillage de l'espace de chargement.

L'objet de la présente invention concerne également un ensemble prêt à monter (encore appelé « kit ») pour un habillage intérieur d'un espace de chargement d'un véhicule utilitaire comprenant au moins un dispositif d'habillage intérieur tel que décrit ci-dessus.

De manière avantageuse, ce kit comprend des moyens d'attache tels que des vis ou des boulons, un ou plusieurs outils utiles à la mise en œuvre du dispositif d'habillage intérieur tel que décrit ci-dessus, des modules de personnalisation de l'habillage, tels que des moyens d'accroche d'outils ou de marchandise, des instructions d'installation, et/ou des instructions d'utilisation de l'habillage.

L'objet de la présente invention concerne en outre un procédé de stockage d'un dispositif d'habillage intérieur tel que décrit ci-dessus, caractérisé en ce qu'au moins un volet du dispositif d'habillage intérieur est replié sur un autre volet dudit dispositif d'habillage intérieur de manière à ce qu'une couche continue de métal du flan composite multicouche soit repliée sur elle-même.

De manière surprenante, lorsque le dispositif d'habillage intérieur selon la présente invention a été stocké ainsi, il a été constaté que son déploiement est facilité par des lignes de pliage plus faciles à mouvoir, sans qu'elles se rompent.

L'objet de la présente invention concerne de plus un véhicule utilitaire roulant présentant un espace de chargement et au moins un habillage intérieur disposé à l'intérieur de l'espace de chargement, caractérisé en ce que l'habillage intérieur est conforme à la description ci-dessus.

L'objet de la présente invention concerne également un procédé de montage d'un habillage intérieur conforme à la description ci-dessus dans un véhicule utilitaire présentant un espace de chargement, caractérisé en ce qu'il comprend le pliage d'au moins une languette d'un dispositif d'habillage intérieur tel que décrit ci-dessus de manière à former un crochet et une fixation de ladite languette sur au moins une structure dudit espace de chargement.

### Brève description des dessins

L'invention sera bien comprise à la lecture de la description suivante d'exemples de réalisation, en référence aux dessins annexés dans lesquels :
[Fig. 1] représente une vue schématique en perspective d'un dispositif d'habillage intérieur selon la présente invention dans une forme déployée ;
[Fig. 2] représente une vue schématique en perspective d'un dispositif d'habillage intérieur selon la présente invention dans une forme repliée ;
[Fig. 3] représente une vue schématique en perspective de languettes non pliées chacune comprise dans son ouverture du dispositif d'habillage intérieur selon la présente invention ;
[Fig. 4] représente une vue schématique en perspective de languettes dans un état plié pour former un crochet rattaché au dispositif d'habillage intérieur selon la présente invention ;
[Fig. 5] représente une vue schématique en perspective d'un véhicule utilitaire lors de la mise en œuvre du dispositif d'habillage intérieur selon la présente invention ;
[Fig. 6] représente une vue schématique en perspective d'un véhicule utilitaire dans lequel le dispositif d'habillage intérieur selon la présente invention a été installé.
[Fig. 7] représente une vue schématique en coupe et en perspective d'un véhicule utilitaire dans lequel le dispositif d'habillage intérieur selon la présente invention a été installé.

Comme mentionné ci-dessus, l'invention a pour objet un dispositif d'habillage intérieur.

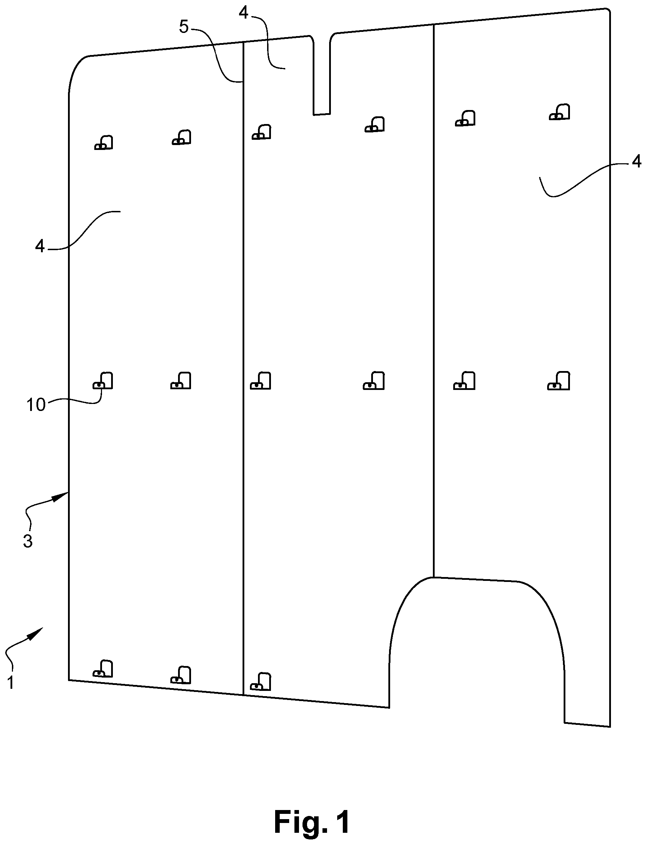

Comme représenté à la figure 1, le dispositif d'habillage d'intérieur 1 de l'espace de chargement d'un véhicule utilitaire comprend un panneau 3 constitué ici de trois volets 4. Ces volets 4 sont séparés par des lignes de pliage 5, parallèles les unes aux autres. Le dispositif d'habillage intérieur (1) comprend des languettes qui sont représentées ici sous forme pliée pour constituer des crochets 10. La figure 1 est une représentation selon une configuration déployée d'un dispositif d'habillage d'intérieur 1 selon la présente invention.

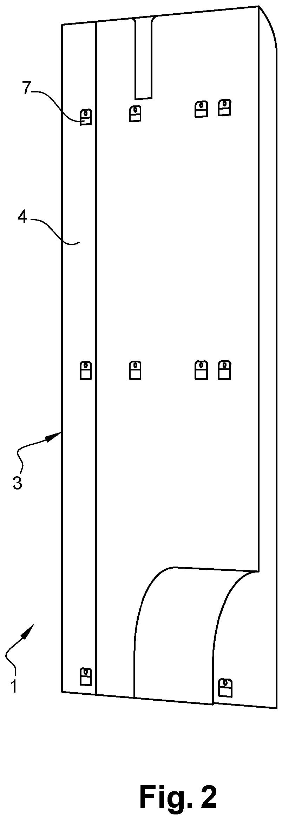

La figure 2 est une représentation selon une configuration repliée d'un dispositif d'habillage d'intérieur 1 selon la présente invention. Il peut être vu sur cette figure un panneau 3 constitué ici de trois volets 4 repliés les uns sur les autres comme un portefeuille. Les languettes 7 permettant de former des crochets 10 sont visibles sur cette représentation.

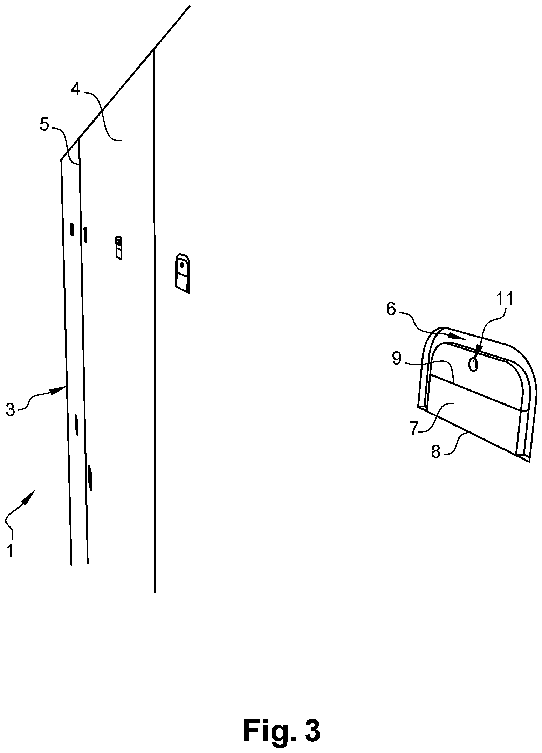

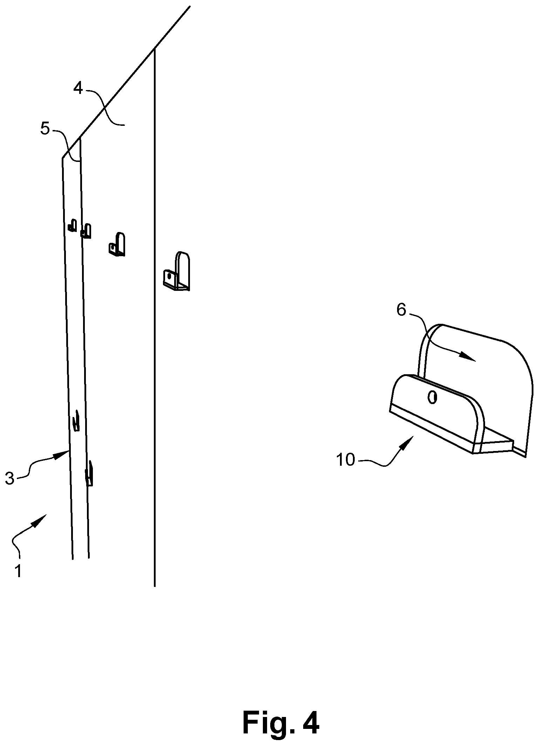

La figure 3 et la figure 4 sont des représentations selon une configuration déployée d'un dispositif d'habillage d'intérieur 1 selon la présente invention, où il peut être vu un panneau 3, trois volets 4 et deux lignes de pliage 5 parallèles l'une à l'autre. Dans la figure 3, les languettes 7 sont coplanaires à l'ouverture 6. Les languettes 7 sont reliées à l'ouverture 6 par des lignes de pliage 8, pour passer d'une position dans laquelle les languettes 7 s'étendent à l'intérieur de l'ouverture 6 de manière coplanaire avec l'ouverture (figure 3) à une position dans laquelle elles s'étendent au moins partiellement en dehors de l'ouverture 6 (figure 4), chaque languette 7 étant pourvue d'au moins une ligne de pliage supplémentaire 9 pour former, dans un état plié de la languette 7, un crochet 10 comme représenté en figure 4.

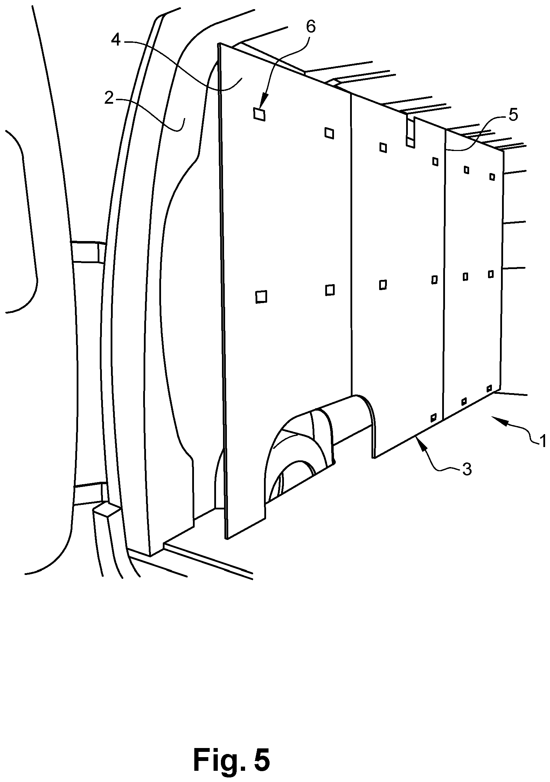

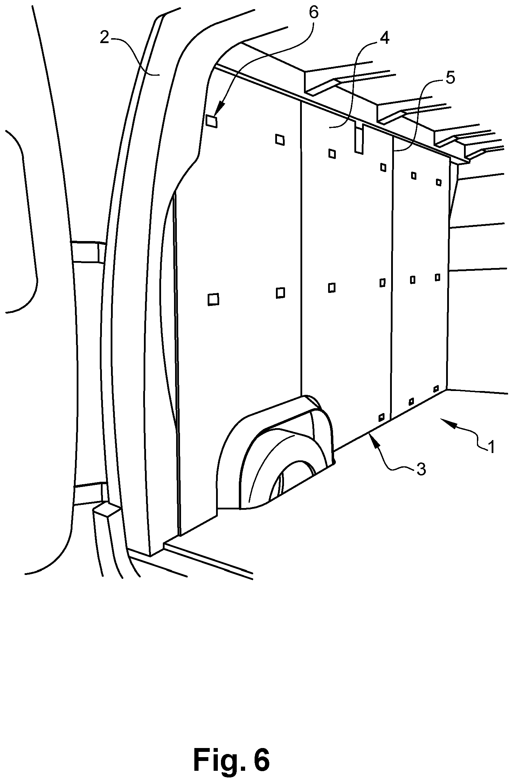

Les figures 5 et 6 sont des représentations en perspective permettant de visualiser l'installation d'un dispositif d'intérieur 1 selon la présente invention dans un véhicule utilitaire 2. Le dispositif d'intérieur 1 représenté est dans une configuration déployée et présente un panneau 3 présentant trois volets 4 reliés par deux lignes de pliage 5 et des ouverture 6 laissant deviner des languettes disposées en crochets, prêt à permettre (figure 5) et assurer la fixation (figure 6) du dispositif d'intérieur 1 selon la présente invention dans un véhicule utilitaire 2.

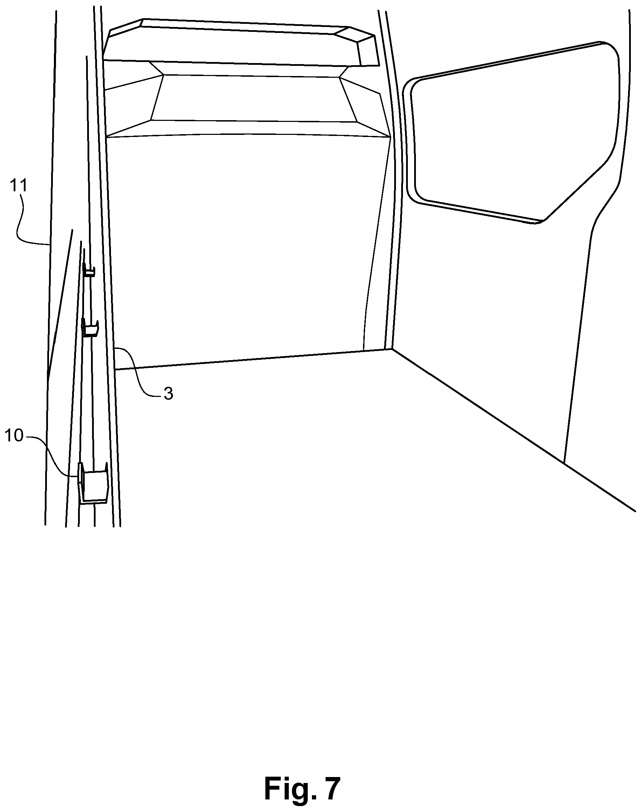

La figure 7 est une représentation en coupe et en perspective d'un mode de réalisation équivalent à celui représenté en figure 6. Il peut être vu en figure 7 un panneau 3 présentant des crochet 10 (issus du pliage de languettes) venir au contact avec une paroi 11 d'un véhicule utilitaire avant sa fixation (par exemple à l'aide de vis).

Bien évidemment, d'autres applications de l'invention peuvent être envisagées sans sortir du cadre de l'invention.

## Revendications

1. Dispositif d'habillage intérieur (1) de véhicule utilitaire (2), ledit dispositif d'habillage intérieur (1) comprenant un ou plusieurs panneaux (3), chaque panneau se présente sous forme d'un flan composite multicouche comprenant au moins une couche de matière de synthèse, chaque panneau est formé d'une succession de volets (4) reliés par des lignes de pliage (5) s'étendant parallèlement, **caractérisé en ce que** ladite couche de matière de synthèse est prise en sandwich entre deux couches de métal et qu' au moins l'un des volets (4) présente une ou plusieurs ouvertures (6), au moins une de ces ouvertures (6) présente une languette (7), reliée par une ligne de pliage (8) à l'ouverture, pour passer d'une position dans laquelle elle s'étend à l'intérieur de l'ouverture (6) de manière coplanaire avec l'ouverture à une position dans laquelle elle s'étend au moins partiellement en dehors de l'ouverture (6), la languette (7) étant pourvue d'au moins une ligne de pliage supplémentaire (9) pour former, dans un état plié de la languette, un crochet (10).

2. Dispositif d'habillage intérieur (1) de véhicule utilitaire (2) selon la revendication 1 **caractérisé en ce que** le flan composite multicouche est aminci au niveau de chaque ligne de pliage (5), par exemple l'une des deux couches de métal a été usinée à chaque ligne de pliage (5).

3. Dispositif d'habillage intérieur (1) de véhicule utilitaire (2) selon la revendication 2 **caractérisé en ce que** la couche de métal ayant été usinée est une couche non-continue de métal dite couche interne et la deuxième couche de métal est une couche continue dite couche visible.

4. Dispositif d'habillage intérieur (1) de véhicule utilitaire (2) selon l'une quelconque des revendications précédentes **caractérisé en ce que** l'épaisseur de la couche de matière de synthèse est supérieure ou égale à 6,5 fois le cumul des épaisseurs des couches de métal.

5. Dispositif d'habillage intérieur (1) de véhicule utilitaire (2) selon l'une quelconque des revendications précédentes **caractérisé en ce qu'**il comprend une configuration repliée et une configuration déployée, ladite configuration repliée comprenant au moins un premier volet (4) replié sur un deuxième volet (4) via l'une des lignes de pliages (5) parallèles.

6. Habillage intérieur de véhicule utilitaire (2) comprenant au moins un dispositif d'habillage intérieur (1) selon l'une quelconque des revendications 1 à 5.

7. Ensemble prêt à monter pour un habillage intérieur d'un espace de chargement d'un véhicule utilitaire (2) comprenant au moins un dispositif d'habillage intérieur (1) selon l'une quelconque des revendications 1 à 5.

8. Procédé de stockage d'un dispositif d'habillage intérieur (1) selon l'une quelconque des revendications 1 à 5 **caractérisé en ce qu'**au moins un volet (4) du dispositif d'habillage intérieur (1) est replié sur un autre volet (4) dudit dispositif d'habillage intérieur (1) de manière à ce qu'une couche continue de métal du flan composite multicouche soit repliée sur elle-même.

9. Véhicule utilitaire (2) roulant présentant un espace de chargement et au moins un habillage intérieur disposé à l'intérieur de l'espace de chargement, **caractérisé en ce que** l'habillage intérieur est conforme à la revendication 6.

10. Procédé de montage d'un habillage intérieur conforme à la revendication 6 dans un véhicule utilitaire (2) présentant un espace de chargement, **caractérisé en ce qu'**il comprend le pliage d'au moins une languette (7) d'un dispositif d'habillage intérieur (1) selon l'une quelconque des revendications 1 à 5 de manière à former un crochet (10) et une fixation de ladite languette (7) sur au moins une structure dudit espace de chargement.

## Patentansprüche

1. Innenverkleidungsvorrichtung (1) eines Nutzfahrzeugs (2), wobei die Innenverkleidungsvorrichtung (1) eine oder mehrere Platten (3) umfasst, wobei jede Platte die Form eines mehrschichtigen Verbundzuschnitts aufweist, der mindestens eine Kunststoffschicht umfasst, wobei jede Platte von einer Folge von Klappen (4) gebildet wird, die durch sich parallel erstreckende Faltlinien (5) verbunden sind, **dadurch gekennzeichnet, dass** die Kunststoffschicht sandwichartig zwischen zwei Metallschichten angeordnet ist und dass mindestens eine der Klappen (4) eine oder mehrere Öffnungen (6) aufweist und mindestens eine dieser Öffnungen (6) eine Lasche (7) aufweist, die durch eine Faltlinie (8) mit der Öffnung verbunden ist, um sich aus einer Position, in der sie sich im Inneren der Öffnung (6) koplanar mit der Öffnung erstreckt, in eine Position zu bewegen, in der sie sich wenigstens teilweise außerhalb der Öffnung (6) erstreckt, wobei die Lasche (7) mit mindestens einer zusätzlichen Faltlinie (9) versehen ist, um in einem umgebogenen Zustand der Lasche einen Haken (10) zu bilden.

2. Innenverkleidungsvorrichtung (1) eines Nutzfahrzeugs (2) nach Anspruch 1, **dadurch gekennzeichnet, dass** der mehrschichtige Verbundzuschnitt an jeder Faltlinie (5) verdünnt ist, zum Beispiel eine der zwei Metallschichten an jeder Faltlinie (5) bearbeitet worden ist.

3. Innenverkleidungsvorrichtung (1) eines Nutzfahrzeugs (2) nach Anspruch 2, **dadurch gekennzeichnet, dass** die Metallschicht, die bearbeitet worden ist, eine nicht durchgehende Metallschicht ist, innere Schicht genannt, und die zweite Metallschicht eine durchgehende Schicht ist, sichtbare Schicht genannt.

4. Innenverkleidungsvorrichtung (1) eines Nutzfahrzeugs (2) nach einem der vorhergehenden Ansprüche, **dadurch gekennzeichnet, dass** die Dicke der Kunststoffschicht größer oder gleich dem 6,5-Fachen der Summe der Dicken der Metallschichten ist.

5. Innenverkleidungsvorrichtung (1) eines Nutzfahrzeugs (2) nach einem der vorhergehenden Ansprüche, **dadurch gekennzeichnet, dass** sie eine gefaltete Konfiguration und eine ausgebreitete Konfiguration umfasst, wobei die gefaltete Konfiguration mindestens eine erste Klappe (4) umfasst, die mittels einer der parallelen Faltlinien (5) auf eine zweite Klappe (4) zurückgefaltet ist.

6. Innenverkleidung eines Nutzfahrzeugs (2), welche mindestens eine Innenverkleidungsvorrichtung (1) nach einem der Ansprüche 1 bis 5 umfasst.

7. Einbaufertige Anordnung für eine Innenverkleidung eines Laderaumes eines Nutzfahrzeugs (2), welche mindestens eine Innenverkleidungsvorrichtung (1) nach einem der Ansprüche 1 bis 5 umfasst.

8. Verfahren zur Lagerung einer Innenverkleidungsvorrichtung (1) nach einem der Ansprüche 1 bis 5, **dadurch gekennzeichnet, dass** mindestens eine Klappe (4) der Innenverkleidungsvorrichtung (1) auf eine andere Klappe (4) der Innenverkleidungsvorrichtung (1) zurückgefaltet wird, so dass eine durchgehende Metallschicht des mehrschichtigen Verbundzuschnitts auf sich selbst zurückgefaltet wird.

9. Rollendes Nutzfahrzeug (2), welches einen Laderaum und mindestens eine im Inneren des Laderaumes angeordnete Innenverkleidung umfasst, **dadurch gekennzeichnet, dass** die Innenverkleidung dem Anspruch 6 entspricht.

10. Verfahren zum Einbau einer Innenverkleidung gemäß Anspruch 6 in ein Nutzfahrzeug (2), das einen Laderaum aufweist, **dadurch gekennzeichnet, dass** es das Umbiegen mindestens einer Lasche (7) einer Innenverkleidungsvorrichtung (1) nach einem der Ansprüche 1 bis 5, um so einen Haken (10) zu bilden, und eine Befestigung der Lasche (7) an mindestens einer Struktur des Laderaumes umfasst.

## Claims

1. Interior trim device (1) for a utility vehicle (2), said interior trim device (1) comprising one or more panels (3), each panel is in the form of a multilayer composite blank comprising at least one layer of synthetic material, each panel is formed of a succession of flaps (4) connected by fold lines (5) extending parallel, **characterized in that** said layer of synthetic material is sandwiched between two layers of metal and **in that** at least one of the flaps (4) has one or more openings (6), at least one of these openings (6) has a tongue (7), which is connected to the opening by a fold line (8), so as to pass from a position in which it extends inside the opening (6) coplanar with the opening to a position in which it extends at least partially outside the opening (6), the tongue (7) being provided with at least one additional fold line (9) so as to form, when the tongue is in a folded state, a hook (10).

2. Interior trim device (1) for a utility vehicle (2) according to Claim 1, **characterized in that** the multilayer composite blank is thinned at each fold line (5), for example one of the two layers of metal has been machined at each fold line (5).

3. Interior trim device (1) for a utility vehicle (2) according to Claim 2, **characterized in that** the layer of metal that has been machined is a non-continuous layer of metal referred to as internal layer and the second layer of metal is a continuous layer referred to as visible layer.

4. Interior trim device (1) for a utility vehicle (2) according to any one of the preceding claims, **characterized in that** the thickness of the layer of synthetic material is greater than or equal to 6.5 times the sum of the thicknesses of the layers of metal.

5. Interior trim device (1) for a utility vehicle (2) according to any one of the preceding claims, **characterized in that** it comprises a folded configuration and a deployed configuration, said folded configuration comprising at least a first flap (4) folded over a second flap (4) via one of the parallel fold lines (5).

6. Interior trim for a utility vehicle (2), comprising at least one interior trim device (1) according to any one of Claims 1 to 5.

7. Ready-to-mount assembly for an interior trim of a loading space of a utility vehicle (2), comprising at least one interior trim device (1) according to any one of Claims 1 to 5.

8. Method for storing an interior trim device (1) according to any one of Claims 1 to 5, **characterized in that** at least one flap (4) of the interior trim device (1) is folded over another flap (4) of said interior trim device (1) such that a continuous metal layer of the multilayer composite blank is folded over on itself.

9. Rolling utility vehicle (2) having a loading space and at least one interior trim disposed inside the loading space, **characterized in that** the interior trim is in accordance with Claim 6.

10. Method for mounting an interior trim in accordance with Claim 6 in a utility vehicle (2) having a loading space, **characterized in that** it comprises folding at least one tongue (7) of an interior trim device (1) according to any one of Claims 1 to 5 so as to form a hook (10) and fastening said tongue (7) to at least one structure of said loading space.
